# EUROPÄISCHE PATENTSCHRIFT

(11) **EP 3 253 830 B1**
(45) Veröffentlichungstag und Bekanntmachung des Hinweises auf die Patenterteilung: **28.11.2018**
(21) Anmeldenummer: 16701044.6
(22) Anmeldetag: 20.01.2016
(51) Int. Cl.: C09D 7/61, C08K 3/32, C09D 7/63, C08K 5/521

(54) **VERWENDUNG VON PHOSPHORSÄURE UND/ODER DEREN ESTERN IN WÄSSRIGEN BASISLACKEN**
USE OF PHOSPHORIC ACID AND/OR ESTERS THEREOF IN WATER BASED VARNISHES
UTILISATION DE L' ACIDE PHOSPHORIQUE ET/OU DE SES ESTERS DANS DES VERNIS DE BASE AQUEUX

(30) Priorität: 05.02.2015 EP 15153945
(43) Veröffentlichungstag der Anmeldung: 13.12.2017
(73) Patentinhaber: BASF Coatings GmbH, 48165 Münster (DE)
(72) Erfinder: STEINMETZ, Bernhard, 97535 Ruetschenhausen (DE); JANKOWSKI, Peggy, 97261 Guentersleben (DE); LUHMANN, Nadia, 97753 Karlstadt- Stetten (DE); MATURA, Michael, 97318 Kitzingen (DE); WOHLFARTH, Michael, 97255 Gelchsheim (DE)
(74) Vertreter: BASF IP Association
(86) Internationale Anmeldenummer: PCT/EP2016/051111
(87) Internationale Veröffentlichungsnummer: WO 2016/124400

(56) Entgegenhaltungen:
- WO-A1-03/011986
- JP-A- 2005 162 929
- JP-A- 2005 162 930

## Beschreibung

Die vorliegende Erfindung betrifft die Verwendung von Phosphorsäure und/oder von Mono- und/oder Diestern der Phosphorsäure in wässrigen Basislacken zur Verbesserung der Zwischenschichthaftung.

Basislacke sind in der Automobillackierung und der Industrielackierung übliche Farb- und/oder effektgebende Zwischenbeschichtungsstoffe. Die Basislackschicht wird durch eine darüber angeordnete Klarlackschicht abgedeckt, die die Basislackierung vor Witterungseinflüssen, mechanischen und chemischen Angriffen schützt. Der Basislack und der Klarlack werden üblicherweise nass-in-nass aufgetragen und durch Einbrennen gemeinsam gehärtet.

Während früher bei der Automobillackierung auf die mit einem Elektrotauchlack beschichtete Karosserie vor dem Basislack zunächst ein Füller aufgebracht wurde, wird in neueren Lackieranlagen häufig auf einen Füller verzichtet. Stattdessen werden in diesem Fall zwei Basislackschichten aufgebracht. Dieser Prozess wird als "Integrated Paint Process" (IPP) bezeichnet.

Ein wesentliches Qualitätskriterium von Lackierungen ist die Haftung der gehärteten Beschichtungsmittel auf dem beschichteten Substrat. Im Falle von Mehrschichtlackierungen, wie sie beispielsweise bei der Automobillackierung üblich sind, kommt außerdem der Haftung zwischen den einzelnen Lackschichten, der sogenannten Zwischenschichthaftung, eine große Bedeutung zu.

Automobillackierungen werden durch auffliegende Steine mechanisch stark beansprucht. Deshalb wird eine hohe Steinschlagbeständigkeit gefordert. Bei mangelnder Haftung der untersten Lackschicht zur Karosserie kann es zum Abplatzen der gesamten Mehrschichtlackierung kommen. Bei mangelnder Zwischenschichthaftung können Teile von einer oder mehreren Schichten bei Steinschlagbeanspruchung abplatzen, ohne dass der Untergrund vollständig freigelegt wird.

Aus der Patentanmeldung WO 03/011986 A1 ist es bekannt, zur Verbesserung der Zwischenschichthaftung den zur Herstellung einer Mehrschichtlackierung verwendeten Überzugsmitteln Borsäure oder andere Borverbindungen als Haftvermittler zuzusetzen.

Hierbei kann auch der zur Herstellung der obersten Schicht verwendete Klarlack die Borverbindungen enthalten.

Bei der industriellen Lackierung von beispielsweise Automobilien durchlaufen die beschichteten Werkstücke eine Ofentrocknungsanlage, in der die aufgebrachten Überzugsmittel durch die Zufuhr von thermischer Energie gehärtet werden. Bei den heute weit verbreiteten Metallic-Lackierungen werden z.B. der Metallic-Basislack und der abschließende Klarlack nass in nass aufgebracht und gemeinsam gehärtet.

Bei der Ofentrocknung beeinflussen sich die Parameter Einbrenndauer und Einbrenntemperatur gegenläufig, d.h. bei höherer Temperatur verkürzt sich die Einbrenndauer und bei längerer Einbrenndauer ist eine niedrigere Temperatur erforderlich, um eine optimal Härtung der Lackierung zu erzielen. Durch Störungen in der Trocknungsanlage, beispielsweise durch einen Stillstand der Transportvorrichtung, kann es dazu kommen, dass die Werkstücke in Hinblick auf die gegebene Temperatur zu lange in der Ofentrocknungsanlage verbleiben. Hierbei kann es zu dem sogenannten Überbrennen kommen. Unter Überbrennen versteht man das Einbrennen eines Beschichtungsstoffes mit höherer Energiezufuhr als für eine vollständige Vernetzung notwendig ist. Dies kann durch eine Überschreitung der Einbrennzeit und/oder der Einbrenntemperatur verursacht werden. Beim Überbrennen können bereits vorhandene Vernetzungen der Moleküle untereinander wieder abgebaut werden, es bilden sich dann Spaltprodukte. Es kann auch eine stärkere Vernetzung als gewünscht beim Überbrennen eintreten. Die geforderten Beständigkeiten des Lackes werden in aller Regel nicht erreicht. Das Überbrennen führt u.a. zu Versprödung oder Vergilbung des Lackfilms (Römpp Lexikon Lacke und Druckfarben, Georg Thieme Verlag, 10. Auflage, 1998, S. 585).

Es ist davon auszugehen, dass ein Überbrennen eintritt, wenn die für einen Lack vorgegebene Einbrennzeit um 20 % oder mehr und/oder die vorgegebene Einbrenntemperatur um 5°C insbesondere 10°C oder mehr überschritten werden.

Aufgrund lackierprozessüblicher Lackierungsfehler, wie z.B. Schmutz, Nadelstichen oder Kratern, ist in manchen Fällen die erneute Lackierung der Werkstücke erforderlich. Dabei kommt es auch vor, dass überbrannte Werkstücke erneut lackiert werden müssen.

Es wurde nun gefunden, dass sich sowohl im Herstellerwerk als auch in Reparaturlackierwerkstätten bei Aufbringung eines Basislacks und eines Klarlacks auf einen bereits vorhandenen gehärteten Klarlack eine außerordentlich schlechte Zwischenschichthaftung ergibt, wenn der bereits gehärtete Klarlack Borverbindungen enthält und überbrannt ist.

Es ist Aufgabe der vorliegenden Erfindung, die Zwischenschichthaftung auf einem bereits gehärteten, überbrannten Klarlack, der Borverbindungen enthält, bei der Aufbringung eines weiteren Basislacks zu verbessern.

Überraschenderweise wurde gefunden, dass diese Aufgabe durch den Zusatz von Phosphorsäure und/oder Phosphorsäureestern zu dem Basislack gelöst werden kann.

Gegenstand der vorliegenden Erfindung ist daher die Verwendung von Phosphorsäure und/oder von Mono- und/oder Diestern der Phosphorsäure in wässrigen Basislacken zur Verbesserung der Haftung dieser Lacke auf überbrannten Klarlacken, die Borverbindungen enthalten.

Die haftungsverbessernde Wirkung von Phosphorsäureestern ist an sich bekannt. Angesichts der großen Zahl von bekannten Haftungsvermittlern war es aber nicht vorhersehbar, dass gerade Phosphorsäureester die Haftung von Reparaturbasislacken auf überbrannten Klarlacken, die Borverbindungen enthalten, verbessern würden.

Vorteilhaft enthalten die Basislacke 0,1 bis 5 Gew.-% Phosphorsäure und/oder Phosphorsäureester bezogen auf den nicht gehärteten Lack. Gehalte von weniger als 0,1 Gew.-% zeigen keine ausreichende Wirkung. Ist der Gehalt an Phosphorsäure und/oder Phosphorsäureester höher als 5 Gew.-%, können Störungen im Lackfilm auftreten.

Besonders vorteilhaft beträgt der Gehalt an Phosphorsäure und/oder Phosphorsäureester 0,3 bis 1,5 Gew.-%.

Die Phosphorsäureester haben vorteilhaft die allgemeine Formel I 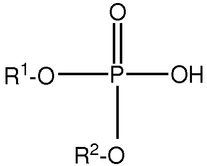 in der R¹ und R² gleich oder voneinander verschieden sind und ausgewählt sind aus der Gruppe bestehend aus substituiertem und unsubstituiertem Alkyl mit 1 bis 20 Kohlenstoffatomen, Cycloalkyl mit 3 bis 20 Kohlenstoffatomen und Aryl mit 6 bis 20 Kohlenstoffatomen, substituiertem und unsubstituiertem Alkylaryl, Arylalkyl, Alkylcycloalkyl, Cycloalkylalkyl, Arylcycloalkyl, Cycloalkylaryl, Alkylcycloalkylaryl, Alkylarylcycloalkyl, Arylcycloalkylalkyl, Arylalkylcycloalkyl, Cycloalkylalkylaryl, und Cycloalkylarylaklyl, wobei die hierin enthaltenen Alkyl-, Cycloalkyl- und Arylgruppen jeweils die vorstehend aufgeführte Anzahl von Kohlenstoffatomen enthalten, und wobei im Falle der Monoester R¹ oder R² Wasserstoff ist.

Besonders vorteilhaft ist der Phosphorsäureester Mono- oder Diphenylphosphat oder Mono- oder Dibutylphosphat oder eine Mischung zweier oder mehrerer der genannten Phosphorsäureester.

Vorteilhaft sind die Basislacke frei von Effektpigmenten, insbesondere Aluminiumeffektpigmenten.

Die bei der erfindungsgemäßen Verwendung einsetzbaren Basislacke und Klarlacke weisen abgesehen von dem Gehalt an Phosphorsäure bzw. -ester in den Basislacken keine Besonderheiten auf. Es können die üblichen wässrigen Basislacke und die üblichen Klarlacke eingesetzt werden.

Im Folgenden wird die Erfindung anhand von Ausführungsbeispielen näher erläutert.

### A) Herstellung eines Mischpolymerisats (MP) beziehungsweise einer wässrigen Dispersion enthaltend dieses Polymerisat

Eine Dispersion eines alpha-methylstyryl-haltigen Polyurethans wurde in Anlehnung an die Patentschrift DE 19948004 B4, Seite 27, Beispiel 1, "Herstellung eines erfindungsgemäßen Polyurethans (B)", hergestellt, wobei zusätzlich Trimethylolpropan eingesetzt wurde und der Festanteil der resultierenden Dispersion nur 29 statt 35,1 Gew.-% betrug. In Anlehnung an das in der Patentschrift DE 19948004 B4 erwähnte Addukt (B2), Herstellbeispiel 1, wurde ein Addukt mit Monoethanolamin statt mit Diethanolamin hergestellt:

Hierzu wurden zuerst in einem Reaktionsgefäß, ausgerüstet mit Rührer, Innenthermometer, Rückflußkühler und elektrischer Heizung, unter Stickstoff 200,0 Gewichtsteile Methylethylketon, 800,0 Gewichtsteile N-Methylpyrrolidon und 221,3 Gewichtsteile Monoethanolamin (Fa. BASF SE) bei 20°C vorgelegt. Zu dieser Mischung wurden während eineinhalb Stunden 778,7 Gewichtsteile 1-(1-lsocyanato-1-methylethyl)-3-(1-methylethenyl)-benzol (TMI® (META) Unsaturated Aliphatic Isocyanate, Fa. Cytec) mit einem Isocyanatgehalt von 20,4 Gew.-% Isocyanat zugetropft, so dass die Reaktionstemperatur 40°C nicht überschritten wurde. Die resultierende Reaktionsmischung wurde so lange gerührt, bis keine freien Isocyanatgruppen mehr nachweisbar waren. Danach wurde die Reaktionsmischung mit 200 ppm Hydrochinon stabilisiert.

Der theoretische Feststoffgehalt der so hergestellten Lösung des beschriebenen Addukts lag bei 50 Gew.-%.

Nun wurden in einem weiteren Reaktionsgefäß, ausgerüstet mit Rührer, Innenthermometer, Rückflußkühler und elektrischer Heizung, 431,7 Gewichtsteile eines linearen Polyesterpolyols und 69,7 Gewichtsteile Dimethylolpropionsäure (Fa. GEO Speciality Chemicals) in 355,8 Gewichtsteilen Methylethylketon und 61,6 Gewichtsteilen N-Methylpyrrolidon unter Stickstoff gelöst. Das lineare Polyesterpolyol wurde zuvor aus dimerisierter Fettsäure (Pripol ® 1012, Fa. Uniqema), Isophthalsäure (Fa. BP Chemicals) und Hexan-1,6-diol (Fa. BASF SE) hergestellt (Gewichtsverhältnis der Ausgangsstoffe: dimere Fettsäure zu Isophthalsäure zu Hexan-1,6-diol = 54,00 : 30,02 : 15,98) und wies eine Hydroxylzahl von 73 mg KOH / g Festanteil und eine zahlenmittlere Molmasse von 1379 g/mol auf. Zu der resultierenden Lösung wurden bei 45°C 288,6 Gewichtsteile Isophorondiisocyanat (Basonat® I, Fa. BASF SE) mit einem Isocyanatgehalt von 37,75 Gew.-% hinzugegeben. Nach dem Abklingen der exothermen Reaktion wurde die Reaktionsmischung unter Rühren langsam auf 80°C erwärmt. Es wurde bei dieser Temperatur weiter gerührt, bis der Isocyanatgehalt der Lösung 3,2 Gew.-% betrug und konstant war. Danach wurde die Reaktionsmischung auf 65°C abgekühlt und 85,2 Gewichtsteile des oben beschriebenen Addukts zusammen mit 21,8 Gewichtsteilen Trimethylolpropan (Fa. BASF SE) hinzugegeben. Die resultierende Reaktionsmischung wurde so lange bei 65°C gerührt, bis der Isocyanatgehalt der Lösung auf 1,0 Gew.-% gesunken war. Jetzt wurden 22,2 Gew.-% Diethanolamin (Fa. BASF SE) zugegeben und der Gehalt an Isocyanatgruppen verfolgt, bis keine freien Isocyanatgruppen mehr nachweisbar waren. Das resultierende, gelöste Polyurethan wurde mit 139,7 Gewichtsteilen Methoxypropanol und 43,3 Gewichtsteilen Triethylamin (Fa. BASF SE) versetzt. 30 Minuten nach der Aminzugabe wurde die Temperatur der Lösung auf 60°C gesenkt, wonach während 30 Minuten 1981 Gewichtsteile deionisiertes Wasser unter Rühren hinzugegeben wurden. Aus der resultierenden Dispersion wurde das Methylethylketon bei 60°C unter Vakuum abdestilliert. Hiernach wurden eventuelle Lösemittel- und Wasserverluste ausgeglichen.

Die so erhaltene Dispersion eines alpha-methylstyryl-haltigen Polyurethans wies einen Feststoffgehalt von 29,0 Gew-% auf, die Säurezahl lag bei 34,0 mg KOH / g Feststoffgehalt und der pH-Wert bei 7,0 (gemessen bei 23°C).

### Beispiele für Lackformulierungen

### 1. Herstellung eines nicht erfindungsgemäßen Wasserbasislacks 1

Die in der Tabelle A aufgeführten Komponenten wurden in der angegebenen Reihenfolge zu einer wässrigen Mischung zusammengerührt. Sodann wurde 10 Minuten lang gerührt und mit Hilfe von deionisiertem Wasser und Dimethylethanolamin auf einen pH Wert von 8 und eine Spritzviskosität von 125 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle A: Wasserbasislack 1 (= DE02-2013-768-1, aber ohne Texanol (ersetzt durch 2-EH) und EFKA 3772)**

| Komponente | Gewichtsteile |
|---|---|
| Mischpolymerisat; hergestellt nach der unter A) beschriebenen Methode | 1,13 |
| Wässrige Tafigel® AP10-Lösung; Rheologiemittel, erhältlich von Münzing Chemie | 0,3 |
| Deionisiertes Wasser | 21,75 |
| TMDD (BASF SE) | 0,42 |
| Weißpaste (siehe Weißpastenherstellung unten) | 45,4 |
| Haftungspolyester analog EP 12182050, Seite 28, Zeile 13 bis Zeile 33 | 6,6 |
| Melaminformaldehydharz (Luwipal® 052 von der BASF SE) | 6,8 |
| 50 Gew.-%ige Lösung Rheovis® PU 1250 (BASF SE) Rheologiemittel | 0,3 |
| Gelbpaste | 6,1 |
| Rußpaste | 3,9 |
| Rotpaste | 0,5 |
| Tributoxyethylphosphat | 1,6 |
| 2-Ethylhexanol | 1,3 |
| Acronal® 290D von der BASF SE | 3,9 |

### Herstellung der Gelbpaste:

Die Gelbpaste wurde aus 49,5 Gewichtsteilen einer gemäß der internationalen Patentanmeldung WO 91/15528 Bindemitteldispersion A hergestellten acrylierten Polyurethandispersion, 37 Gewichtsteilen Bayferrox® 3910 und 13,5 Gewichtsteilen deionisiertem Wasser hergestellt.

### Herstellung der Rußpaste:

Die Rußpaste wurde aus 25 Gewichtsteilen einer gemäß der internationalen Patentanmeldung WO 91/15528 Bindemitteldispersion A hergestellten acrylierten Polyurethandispersion, 10 Gewichtsteilen Ruß, 0,1 Gewichtsteilen Methylisobutylketon, 1,36 Gewichtsteilen Dimethylethanolamin (10%ig in VE-Wasser), 2 Gewichtsteilen eines handelsüblichen Polyethers (Pluriol® P900 der Firma BASF SE) und 61,45 Gewichtsteilen deionisiertem Wasser hergestellt.

### Herstellung der Rotpaste:

Die Rotpaste wurde aus 40 Gewichtsteilen einer gemäß der internationalen Patentanmeldung WO 91/15528 Bindemitteldispersion A hergestellten acrylierten Polyurethandispersion, 34,5 Gewichtsteilen Cinilex® DPP Rot, 2 Gewichtsteilen eines handelsüblichen Polyethers (Pluriol® P900 der Firma BASF SE), Gewichtsteilen 1-Propoxy-2-propanol und 20,5 Gewichtsteilen deionisiertem Wasser hergestellt.

### Herstellung der Weißpaste:

Die Weißpaste wurde analog der PAT 75688 aus 43 Gewichtsteilen Titan Rutil 2310, 39 Gewichtsteilen des Mischpolymerisats (hergestellt nach der unter A) beschriebenen Methode), 5 Gewichtsteilen Butylglykol und 13 Gewichtsteilen deionisiertem Wasser hergestellt.

### 2. Herstellung eines erfindungsgemäßen Wasserbasislacks E1

Der Wasserbasislack E1 wurde analog Tabelle A hergestellt, wobei allerdings zusätzlich 6,5 Gewichtsteile einer Mischung aus 13 Gewichtsteilen Duraphos® BAP (Solvay) und 87 Gewichtsteilen einer 10%igen Dimethylethanolamin in deionisiertem Wasser zugesetzt wurden.

### 3. Herstellung eines erfindungsgemäßen Wasserbasislacks E2

Der Wasserbasislack E2 wurde analog Tabelle A hergestellt, wobei allerdings zusätzlich 1,58 Gewichtsteile Baysolvex® D2EHPA (Lanxess), welche vorher mit 10%igem Dimethylethanolamin in deionisiertem Wasser neutralisiert wurden, zugesetzt wurden.

### 4. Herstellung eines erfindungsgemäßen Wasserbasislacks E3

Der Wasserbasislack E3 wurde analog Tabelle A hergestellt, wobei allerdings zusätzlich 6,9 Gewichtsteile einer Mischung aus 75 Gewichtsteilen Phenyl Acid Phosphate® (IlseChem, LLC) und 337,5 Gewichtsteilen einer 10%igen Lösung von Dimethylethanolamin in deionisiertem Wasser zugesetzt wurden.

### 5. Herstellung eines erfindungsgemäßen Wasserbasislacks E4

Der Wasserbasislack E4 wurde analog Tabelle A hergestellt, wobei allerdings zusätzlich 0,298 Gewichtsteile einer Mischung aus 6,3 Gewichtsteilen Phosphorsäure (Brenntag) und 93,7 Gewichtsteilen einer 10%igen Dimethylethanolamin in deionisiertem Wasser zugesetzt wurden.

### 6. Herstellung eines nicht erfindungsgemäßen Wasserbasislacks 2

Die in der Tabelle B unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle B: Wasserbasislack 2 (analog DE02-2013-523-2)**

| Komponente | Gewichtsteile |
|---|---|
| **Wässrige Phase** | |
| 3%ige Na-Mg-Schichtsilikatlösung | 29,1 |
| Deionisiertes Wasser | 10,5 |
| Butylglykol | 4,1 |
| Polyurethanmodifiziertes Polyacrylat; hergestellt gemäß S. 7, Z. 55 bis S.8, Z. 23 der DE 4437535 A1 | 2,8 |
| 50 Gew.-%ige Lösung Rheovis® PU 1250 (BASF SE) Rheologiemittel | 0,2 |
| Polyester; hergestellt gemäß Beispiel D, Spalte 16, Z. 37-59 der DE-A-4009858 | 5,5 |
| TMDD (BASF SE) | 1,4 |
| Melaminformaldehydharz (Luwipal® 052 von der BASF SE) | 2,9 |
| 10%iges Dimethylethanolamin in Wasser | 0,4 |
| Pfropfmischpolymerisat auf Polyurethanbasis; hergestellt analog DE 19948004 - A1 (Seite 27 - Beispiel 2) | 24,1 |
| Isopropanol | 1,6 |
| Isopar® L von der Exxon Mobile | 2 |
| Byk-347® der Firma Altana | 0,6 |
| Pluriol® P 900 der Firma BASF SE | 0,4 |
| Tinuvin® 384-2 der Firma BASF SE | 0,7 |
| Tinuvin 123 der Firma BASF SE | 0,4 |
| Rußpaste | 0,4 |
| Blaupaste | 1,5 |

| **Organische Phase** | |
|---|---|
| Aluminiumpigment 1, erhältlich von Firma Altana-Eckart | 1,8 |
| Aluminiumpigment 2, erhältlich von Firma Altana-Eckart | 2 |
| Butylglykol | 3,8 |
| Pfropfmischpolymerisat auf Polyurethanbasis; hergestellt analog DE 19948004 - A1 (Seite 27 - Beispiel 2) | 3,8 |

### Herstellung der Blaupaste:

Die Blaupaste wurde aus 69,8 Gewichtsteilen einer gemäß der internationalen Patentanmeldung WO 91/15528 Bindemitteldispersion A hergestellten acrylierten Polyurethandispersion, 12,5 Gewichtsteilen Paliogen® Blau L 6482, 1,5 Gewichtsteilen Dimethylethanolamin (10%ig in VE-Wasser), 1,2 Gewichtsteilen eines handelsüblichen Polyethers (Pluriol® P900 der Firma BASF SE) und 15 Gewichtsteilen deionisiertem Wasser hergestellt.

### Herstellung der Rußpaste:

Die Rußpaste wurde aus 25 Gewichtsteilen einer gemäß der internationalen Patentanmeldung WO 91/15528 Bindemitteldispersion A hergestellten acrylierten Polyurethandispersion, 10 Gewichtsteilen Ruß, 0,1 Gewichtsteilen Methylisobutylketon, 1,36 Gewichtsteilen Dimethylethanolamin (10%ig in VE-Wasser), 2 Gewichtsteilen eines handelsüblichen Polyethers (Pluriol® P900 der Firma BASF SE) und 61,45 Gewichtsteilen deionisiertem Wasser hergestellt.

### Vergleich zwischen den Wasserbasislacken 1 und E1-E4

Zur Bestimmung der Steinschlagbeständigkeit wurden die Mehrschichtlackierungen nach der folgenden allgemeinen Vorschrift hergestellt. Der Prozess entspricht dem Integrated Paint Process (IPP).

Ein mit einer KTL beschichtetes Stahlblech der Abmessungen 10 x 20 cm diente als Substrat.

Auf dieses Blech wurde zunächst der Wasserbasislack 1 bzw. E1-E4 appliziert. Nach 4 min Ablüften des Basislacks bei Raumtemperatur wurde jeweils der Wasserbasislack 2 appliziert, anschließend 4 min bei Raumtemperatur abgelüftet und danach über 10 min bei 70 °C im Umluftofen zwischengetrocknet. Auf die getrocknete Wasserbasislackschicht wurde der borhaltige Zweikomponentenklarlack CeramiClear® der Firma PPG appliziert. Die resultierende Klarlackschicht wurde während 20 Minuten bei Raumtemperatur abgelüftet. Anschließend wurden die Wasserbasislackschicht und die Klarlackschicht in einem Umluftofen während 68 Minuten bei 150°C gehärtet, um ein Überbrennen zu erreichen. Die vorgegebene Einbrennzeit beträgt 20 Minuten und die vorgegebene Einbrenntemperatur beträgt 140°C für den Klarlack CeramiClear®. Anschließend wurde der Wasserbasislack 1 bzw. E1-E4 auf die oben beschriebene Originallackierung appliziert. Nach 4 min Ablüften des Basislacks bei Raumtemperatur wurde jeweils der Wasserbasislack 2 appliziert, anschließend 4 min bei Raumtemperatur abgelüftet und danach über 10 min bei 70 °C im Umluftofen zwischengetrocknet. Auf die getrocknete Wasserbasislackschicht wurde der Zweikomponentenklarlack CeramiClear® der Firma PPG appliziert. Die resultierende Klarlackschicht wurde während 20 Minuten bei Raumtemperatur abgelüftet. Anschließend wurden die Wasserbasislackschicht und die Klarlackschicht in einem Umluftofen während 20 Minuten bei 140°C gehärtet.

Die so erhaltenen Mehrschichtlackierungen wurden bzgl. Gitterschnitthaftung untersucht. Dazu wurde der Gitterschnitt nach DIN EN ISO 2409:2013-6 durchgeführt. Die Beurteilung der Ergebnisse des Gitterschnitttests wurde nach DIN EN ISO 2409:2013-6 durchgeführt. Die Ergebnisse finden sich in der Tabelle 1.

**Tabelle 1: Gitterschnittbeständigkeit der Gesamtaufbauten aus Wasserbasislack 1 bzw. E1-E4 und dem Wasserbasislack 2**

| **WBL-Aufbau** | **Gitterschnittergebnis** | **Beurteilung** |
|---|---|---|
| 1 & 2 | 5 | nicht in Ordnung |
| E1 & 2 | 0 | in Ordnung |
| E2 & 2 | 0 | in Ordnung |
| E3 & 2 | 0 | in Ordnung |
| E4 & 2 | 0 | in Ordnung |

Die Ergebnisse zeigen, dass der erfindungsgemäße Einsatz von Phosphorsäure und/oder Phosphorsäuremono- und -diestern die Gitterschnittbeständigkeit im Vergleich zu den Wasserbasislacken 1 deutlich erhöht.

### Liste der verwendeten Rohstoffe:

**Tafigel® AP10** modifiziertes Acrylpolymer (Verdicker) (Münzing Chemie GmbH)
**TMDD** 2,4,7,9-Tetramethyl-5-decin-4,7-diol
**Luwipal® 052** verethertes Melamin-Formaldehydharz (BASF SE)
**Rheovis® PU** Rheologie-Modifikator (BASF SE)
**Acronal® 290D** Acrylat-Dispersion (BASF SE)
**Bayferrox® 3910** Eisenoxidpigment (LANXESS AG)
**Pluriol® P900** Polypropylenglykol (BASF SE)
**Cinilex® DPP Rot** Rotpigment (CINIC CHEMICALS)
**Titan Rutil 2310** Titandioxid (Kronos Titan GmbH)
**Duraphos® BAP** Phosphorsäurebutylester (Solvay)
**Baysolvex® D2EHPA** Di-(2-ethylhexyl)phosphorsäure (LANXESS AG)
**Phenyl Acid Phosphate®** Mischung von Phosphorsäure-monophenylester und -diphenylester (Islechem.LLC)
**Isopar® L** isoparaffinischer Kohlenwasserstoff (ExxonMobil)
**Byk-347®** Silikontensid (BYK Chemie GmbH)
**Tinuvin®384-2** Lichtstabilisator (BASF SE)
**Tinuvin 123** Lichtstabilisator (BASF SE)
**Paliogen® Blau L 6482** Blaupigment (BASF SE)

## Patentansprüche

1. Verwendung von Phosphorsäure und/oder von Mono- und/oder Diestern der Phosphorsäure in wässrigen Basislacken zur Verbesserung der Haftung dieser Lacke auf überbrannten Klarlacken, die Borverbindungen enthalten.

2. Verwendung nach Anspruch 1, **dadurch gekennzeichnet, dass** die Basislacke 0,1 bis 5 Gew.-% Phosphorsäure und/oder Phosphorsäureester bezogen auf den nicht gehärteten Lack enthalten.

3. Verwendung nach Anspruch 2, **dadurch gekennzeichnet, dass** der Gehalt an Phosphorsäure und/oder Phosphorsäureester 0,3 bis 1,5 Gew.-% beträgt.

4. Verwendung nach Anspruch 1 bis 3, **dadurch gekennzeichnet, dass** die Phosphorsäureester die allgemeine Formel I haben 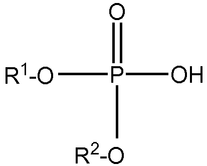 in der R¹ und R² gleich oder voneinander verschieden sind und ausgewählt sind aus der Gruppe bestehend aus substituiertem und unsubstituiertem Alkyl mit 1 bis 20 Kohlenstoffatomen, Cycloalkyl mit 3 bis 20 Kohlenstoffatomen und Aryl mit 6 bis 20 Kohlenstoffatomen, substituiertem und unsubstituiertem Alkylaryl, Arylalkyl, Alkylcycloalkyl, Cycloalkylalkyl, Arylcycloalkyl, Cycloalkylaryl, Alkylcycloalkylaryl, Alkylarylcycloalkyl, Arylcycloalkylalkyl, Arylalkylcycloalkyl, Cycloalkylalkylaryl, und Cycloalkylarylaklyl, wobei die hierin enthaltenen Alkyl-, Cycloalkyl- und Arylgruppen jeweils die vorstehend aufgeführte Anzahl von Kohlenstoffatomen enthalten, und wobei im Falle der Monoester R¹ oder R² Wasserstoff ist.

5. Verwendung nach Anspruch 1 bis 4, **dadurch gekennzeichnet, dass** der Phosphorsäureester Mono- oder Diphenylphosphat oder Mono- oder Dibutylphosphat oder eine Mischung zweier oder mehrerer der genannten Phosphorsäureester ist.

6. Verwendung nach Anspruch 1 bis 5, **dadurch gekennzeichnet, dass** die Basislacke frei von Effektpigmenten, insbesondere Aluminiumeffektpigmenten, sind.

## Claims

1. Use of phosphoric acid and/or of monoesters and/or diesters of phosphoric acid in aqueous basecoat materials for improving adhesion of these coating materials to overbaked clearcoat materials which comprise boron compounds.

2. Use according to Claim 1, **characterized in that** the basecoat materials contain 0.1 to 5 wt% of phosphoric acid and/or phosphoric esters, based on the uncured coating material.

3. Use according to Claim 2, **characterized in that** the amount of phosphoric acid and/or phosphoric esters is 0.3 to 1.5 wt%.

4. Use according to Claim 1 to 3, **characterized in that** the phosphoric esters have the general formula I 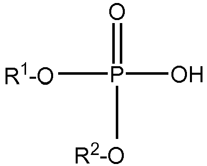 in which R¹ and R² are identical to or different from one another and are selected from the group consisting of substituted and unsubstituted alkyl having 1 to 20 carbon atoms, cycloalkyl having 3 to 20 carbon atoms, and aryl having 6 to 20 carbon atoms, substituted and unsubstituted alkylaryl, arylalkyl, alkylcycloalkyl, cycloalkylalkyl, arylcycloalkyl, cycloalkylaryl, alkylcycloalkylaryl, alkylarylcycloalkyl, arylcycloalkylalkyl, arylalkylcycloalkyl, cycloalkylalkylaryl, and cycloalkylarylalkyl, the alkyl, cycloalkyl, and aryl groups present therein containing in each case the above-stated number of carbon atoms, and R¹ or R² being hydrogen in the case of the monoesters.

5. Use according to Claim 1 to 4, **characterized in that** the phosphoric ester is monophenyl or diphenyl phosphate or monobutyl or dibutyl phosphate, or a mixture of two or more of the stated phosphoric esters.

6. Use according to Claim 1 to 5, **characterized in that** the basecoat materials are free from effect pigments, more particularly aluminum effect pigments.

## Revendications

1. Utilisation d'acide phosphorique et/ou de mono- et/ou diesters de l'acide phosphorique dans des vernis de base aqueux pour améliorer l'adhérence de ces vernis sur des vernis transparents surcuits qui contiennent des composés de bore.

2. Utilisation selon la revendication 1, **caractérisée en ce que** les vernis de base contiennent 0,1 à 5 % en poids d'acide phosphorique et/ou d'esters de l'acide phosphorique, par rapport au vernis non durci.

3. Utilisation selon la revendication 2, **caractérisée en ce que** la teneur en acide phosphorique et/ou esters de l'acide phosphorique est de 0,3 à 1,5 % en poids.

4. Utilisation selon les revendications 1 à 3, **caractérisée en ce que** les esters de l'acide phosphorique ont la formule générale I 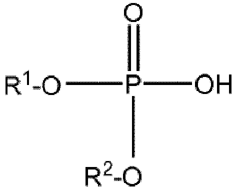 dans laquelle R¹ et R² sont identiques ou différents l'un de l'autre, et sont choisis dans le groupe constitué par alkyle de 1 à 20 atomes de carbone substitué et non substitué, cycloalkyle de 3 à 20 atomes de carbone et aryle de 6 à 20 atomes de carbone, alkylaryle substitué et non substitué, arylalkyle, alkylcycloalkyle, cycloalkylalkyle, arylcycloalkyle, cycloalkylaryle, alkylcycloalkylaryle, alkylarylcycloalkyle, arylcycloalkylalkyle, arylalkylcycloalkyle, cycloalkylalkylaryle et cycloalkylarylalkyle, les groupes alkyle, cycloalkyle et aryle contenus dans ceux-ci contenant à chaque fois le nombre indiqué précédemment d'atomes de carbone et, dans le cas des monoesters, R¹ ou R² représentant l'hydrogène.

5. Utilisation selon les revendications 1 à 4, **caractérisée en ce que** l'ester de l'acide phosphorique est le phosphate de mono- ou diphényle ou le phosphate de mono- ou dibutyle ou un mélange de deux ou plus des esters de l'acide phosphorique mentionnés.

6. Procédé selon les revendications 1 à 5, **caractérisé en ce que** les vernis de base sont exempts de pigments à effet, notamment de pigments à effet à base d'aluminium.
